# EUROPEAN PATENT SPECIFICATION

(11) **EP 1 120 986 B1**
(45) Date of publication and mention of the grant of the patent: **14.06.2006**
(21) Application number: 01400200.0
(22) Date of filing: 25.01.2001
(51) Int. Cl.: H04Q 7/38

(54) **Method and system for allocating radio channels in a radiocommunication system**
Verfahren und System zur Funkkanalzuweisung in einem Funkkommunikationssystem
Procédé et système d'attribution de canaux radio dans un système de radiocommunication

(30) Priority: 25.01.2000 ES 200000149
(43) Date of publication of application: 01.08.2001
(73) Proprietor: ALCATEL, 75008 Paris (FR)
(72) Inventor: Aguilar Sanchez, Luciano Jesus, 28005 Madrid (ES); Heras Brandin, Alberto, 28100 Alcobendas, Madrid (ES); Lablanca Almeida, Javier, 28045 Madrid (ES); Lopez Almansa, Eugenio, 28019 Madrid (ES); Perez Abadia, Mariano, 28045 Madrid (ES); Fernandez Duran, Alfonso, 28229 Villanueva del Pardillo, Madrid (ES)
(74) Representative: Lamoureux, Bernard

(56) References cited:
- WO-A-98/17077
- US-A- 5 742 593

## Description

### OBJECT OF THE INVENTION

The present invention relates to a method and a system for allocating radio channels in a radiocommunication system in which at least one fixed unit communicates with a set of remote units, fixed and/or mobile, making joint use of code division multiple access (CDMA) and time division multiple access (TDMA) techniques, by means of radio communications.

The method for allocating the radio resources of the TD-CDMA radiocommunication system provides a remote unit involved in a process of setting up a communication with an active part in the radio channel allocation process, so that the allocation of radio channels is carried out according to some pre-established criteria, the allocation process being highly efficient.

The TD-CDMA radiocommunication system forms a cellular network that is capable of carrying out several simultaneous communications in a same time slot.

### STATE OF THE ART

Generally, a radiocommunication system is connected through fixed units to a transport network, such as a public switched telephone network PSTN, and to the subscribers through remote units, fixed and/or mobile, distributed over the coverage area associated with each fixed unit.

The final or last mile connection to the subscribers is made over cable, or by radio access, or by a mix of the two techniques. The system has a tree structure, so that the fixed unit communicates by radio with the remote units that lie within its coverage area.

In a TD-CDMA radiocommunication system, a radio channel is defined by a carrier frequency, a time slot of the frame and a code.

The fixed unit governs the allocation of a radio channel to a communication which it is desired to set up, this procedure being known through the US patent 5,491,837 granted to Haartsen, incorporated in the present patent application by reference.

The TD-CDMA radiocommunication system in which the fixed unit is that serving to govern and/or direct the allocation of a radio channel to a communication, either when a remote unit wishes access, for example, to the PSTN telephone network via the TD - CDMA radiocommunication system, or or else when the fixed unit detects the presence of a call addressed to the remote unit, presents certain disadvantages such as an increased complexity of the fixed unit, a heavy computational load and, consequently, a slow adaptation of the fixed unit and the remote units to the radio environment, possibly implying the disruption of some communication in course. As a consequence, the allocation process has a low efficiency.

It is therefore desirable to provide a method and a system for allocating radio channels, in such a way that, among other advantages, the different units of the TD-CDMA radiocommunication system adapt quickly to the changes that may arise in the radio environment and the operating complexity of the fixed unit is substantially reduced.

US-A-5 742 593 discloses a system for establishing links among identical nodes of a radio communication system TDM/CDMA such that these nodes may be set up directly link or indirecty link through an intermediate node. A node selects a link between the links are not used by both nodes in another communications, i.e. links establishes with neighbours nodes of both nodes.

### CHARACTERISATION OF THE INVENTION

In order to overcome the drawbacks mentioned above, the method and the system of the present invention are proposed, whereby the process of allocating a radio channel, over which a communication shall take place, is governed and/or directed by a remote unit involved in said communication.

The inventive solution is characterized by a method for allocating radio channels in a radio communication system, a system, a remote unit and a fixed unit incorporating the features of claims 1, 6, 7 and 13 respectively.

The remote unit of the TD-CDMA radiocommunication system governs the process of allocating the radio channel, based on at least information provided by a fixed unit, measurements made by the remote unit itself, and selection criteria previously set for the purpose of allocating a radio channel to a communication in set-up or hand-over phase.

### BRIEF DESCRIPTION OF THE DRAWINGS

A more detailed explanation of the invention is given in the following description, based on the attached drawings, in which:

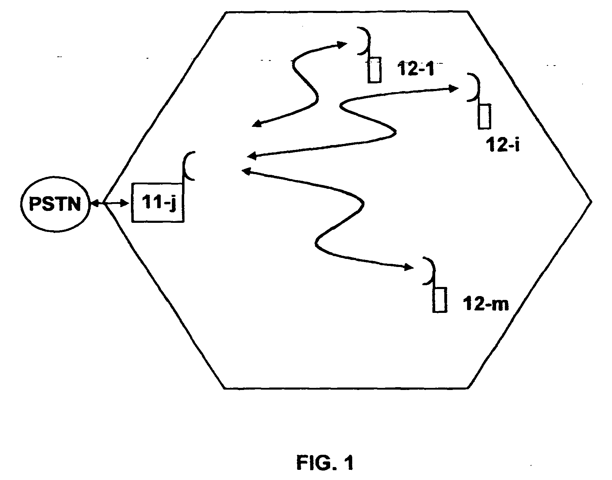

- figure 1 shows, in block diagram form, a radio communication system according to the invention.

### DESCRIPTION DE THE INVENTION

Figure 1 shows a TD-CDMA radiocommunication system that combines time division multiple access (TDMA) and code division multiple access (CDMA) techniques.

The TD-CDMA system comprises a set of remote units 12-1 to 12-m, fixed and/or mobile, distributed among a plurality of coverage areas, into which is divided the geographical area to be covered by the TD-CDMA radiocommunication system. Each coverage area is associated with a fixed unit 11-j (wherej = 1, ..., n); consequently, the TD-CDMA radiocommunication system is cellular.

The TD-CDMA radiocommunication system is divided into a plurality of cells, comprising each cell at least one fixed unit 11-j, which often is connected to a communications network, such as a public switched telephone network PSTN, for example.

The fixed unit 11-j is capable of maintaining and setting up simultaneously various communications with a plurality of remote units 12-1 to 12-m located inside its coverage area.

When there is a communication in course between the fixed unit 11-j and a remote unit 12-i (where i = 1, ..., m), this takes place over a radio channel, which is characterised by a time slot of a TD-CDMA frame, a code and a carrier frequency.

Since it concerns a TD-CDMA system, various communications can be established simultaneously over one time slot.

The TD-CDMA frame is divided into a set of time slots, each one of which can be dedicated to uplink or downlink transmission.

The fixed unit 11-j comprises a radio interface for transmitting and receiving radio signals to and from the remote units 12-1 to 12-m distributed within its coverage area. Likewise, the remote unit 12-i comprises also a radio interface.

According to the invention, when a subscriber wishes to set up a communication, the remote unit 12-i sends a call set-up request message to the fixed unit 11 -j, initiating the call set-up process and, subsequently, the process for allocating at least one available radio channel for the communication is also started.

In the process of allocating the radio channel, the remote unit 12-i is that which governs and/or directs the process of selecting the time slot and code pair with which the radio channel is defined. As a result, this TD-CDMA radiocommunication system follows a distributed and not centralised procedure during the process of selecting the traffic channel over which a communication is set up.

The remote unit 12-i carries out measurements designed to find the power received in each time slot of the TD-CDMA frame in the downlink direction. The fixed unit 11-j broadcasts information on the power with which each time slot of the TD-CDMA frame is received in the uplink direction.

A time slot, uplink or downlink, is selectable for setting up the communication when the measured power meets some defined conditions, such as received power being below a threshold level.

If there are various time slots selectable for setting up the communication, the remote unit 12-i initiates a process to select a time slot according to a predetermined criterion, such as: uniform occupation of time slots in the frame (in number of radio channels and/or power); total occupation of the radio channels of a time slot before starting to allocate radio channels of another time slot for new communications; allocation of a predetermined group of radio channels to a predetermined group of subscribers, according to certain criteria, such as equivalent distance to the fixed unit 11-j, a service quality parameter (bit rate and bit error rate) analogous for a predetermined type of service, and so on.

Once the remote unit 12-i locates a time slot that satisfies the different aforementioned criteria, it may be necessary to select a code for finalising the definition of the radio channel.

The code can be selected from among a predetermined set of codes known to the remote units 12-1 to 12-m that lie within the coverage area of the fixed unit 11-j. The fixed unit 11-j broadcasts information concerning the codes allocated to communications in course in each time slot. Given that the remote unit 12-i knows the codes that are in use, it is capable of scanning for and selecting a free code.

The remote unit 12-i shall select as many time slot/code pairs as are necessary (both in the uplink and in the downlink direction), for the purpose of obtaining the radio resources necessary for carrying out the setting up of the communication. Once the pairs are selected, each one formed by a time slot and a code, the remote unit 12-i sends a call set-up request message to the fixed unit 11-j, proposing said radio channels selected in order to set up the new communication over said radio channels.

The fixed unit 11-j confirms or denies each one of the radio channels proposed by the remote unit 12-i for setting up the communication. If the fixed unit 11-j confirms the radio channel, then the communication is set up over said radio channel, time slot and code selected by the remote unit 12-i.

In the event that the fixed unit 11-j denies a radio channel selected, the remote unit 12-i is capable of repeating the selection process, with the aim of proposing a new radio channel to the fixed unit 11-j for setting up the communication.

## Claims

1. **Method for allocating radio channels in a radiocommunication system** that comprises at least a fixed unit (11-j) that communicates by radio with a plurality of remote units (12-1 to 12-m), so that within a time slot of a frame it is possible to set up various simultaneous communications employing CDMA codes, and that the time slot and the CDMA code are selected according to a defined condition and in an independent manner, **characterised in that**:
a) the selection of at least one time slot/CDMA code pair according to a defined condition, is performed on the part of a remote unit (12-i) taking into account the power measured in downlink time slots of the frame and information broadcast by the fixed unit (11-j); and **in that**
b) each time slot/CDMA code pair selected is sent by the remote unit (12-i), inside a call set-up request message to the fixed unit (11-j).

2. **Method for allocating radio channels** according to claim 1 wherein, in case of more than one time slots being selectable, the method comprises the further step of:
c) selecting by the remote unit (12-i) of a time slot/CDMA code pair according to a predetermined selection criterion.

3. **Method for allocating radio channels** according to claim 2 wherein the predetermined selection criterion is chosen among one of the following: uniform occupation of time slots in the frame in number of radio channels and/or power; total occupation of the radio channels of a time slot before starting to allocate radio channels of another time slot for a new communication; allocation of a predetermined group of radio channels to a predetermined group of subscribers, according to certain criteria, such as equivalent distance to the fixed unit (11-j) or service quality parameter for a predetermined type of service.

4. **Method for allocating radio channels** according to claim 3, wherein it also comprises the step of confirmation or denial of each time slot/CDMA code pair selected, on the part of the fixed unit (11-j).

5. **Method for allocating radio channels** according to claim 4, wherein it also comprises the step of repetition of the steps a) and b) or a), b) and c), on the part of the remote unit (12-i), in the event of any time slot/CDMA code pair selected being denied.

6. **Radiocommunication system** that comprises at least one fixed unit (11-j) for communicating by radio with a plurality of remote units (12-1 to 12-m), the system being capable of setting up of various simultaneous communications employing CDMA codes in a time slot of a TDMA frame and of selecting the time slots and the CDMA code according to a defined condition and in an independent manner, **characterised in that** the fixed unit (11-j) has means for:
a) broadcasting to a remote unit (12-i) information suitable for selecting at least one time slot/CDMA code pair; and
b) receiving each time slot/CDMA code pair selected inside a call set-up request message from the remote unit (11-j);
and **in that** the remote unit (12-i) has means for:
a) selecting at least one time slot/CDMA code pair taking into account the power measured in downlink time slots of the frame and information broadcast by the fixed unit (11-j); and
b) sending each time slot/CDMA code pair selected inside a call set-up request message to the fixed unit (11-j).

7. **Remote unit for allocating radio channels in a radiocommunication system,** for communicating by radio with a fixed unit (11-j) for setting up of various simultaneous communications employing CDMA codes in a time slot of a TDMA frame and for selecting the time slots and the CDMA code according to a defined condition and in an independent manner, **characterised in that** the remote unit (12-i) has means for:
a) selecting at least one time slot/COMA code pair taking into account the power measured in downlink time slots of the frame and information broadcast by the fixed unit (11-j); and for
b) sending each time slot/CDMA code pair selected inside a call set-up request message to the fixed unit (11-j).

8. **Remote unit for allocating radio channels** according to claim 7 wherein, in case of more than one time slots being selectable, the remote unit (12-i) has means for:
c) selecting a time slot/CDMA code pair according to a predetermined selection criterion.

9. **Remote unit for allocating radio channels** according to claim 8 wherein the remote unit (12-i) has means for choosing from one of the following predetermined selection criteria: uniform occupation of time slots in the frame in number of radio channels and/or power; total occupation of the radio channels of a time slot before starting to allocate radio channels of another time slot for a new communication; allocation of a predetermined group of radio channels to a predetermined group of subscribers, according to certain criteria, such as equivalent distance to the fixed unit (11-j) or service quality parameter for a predetermined type of service.

10. **Remote unit for allocating radio channels** according to claim 9, wherein the remote unit (12-i) has means for repeating steps a) and b) or a), b) and c) in the event of any time slot/CDMA code pair selected being denied by the fixed unit (11-j).

11. **Remote unit for allocating radio channels** according to claim 7, wherein the remote unit (12-i) has means for measuring the total power received in each time slot.

12. **Remote unit for allocating radio channels** according to claim 7, wherein the remote unit (12-i) has means for selecting the CDMA code according to the information provided by the fixed unit (11-j)

13. **Fixed unit for use in the radiocommunication system** according to claim 6 for communicating by radio with a plurality of remote units (12-1 to 12-m), the system being capable of setting up of various simultaneous communications employing CDMA codes in a time slot of a TDMA frame and of selecting the time slots and the CDMA code according to a defined condition and in an independent manner, **characterised in that** the fixed unit (11-j) has means for:
- broadcasting to a remote unit (12-i) information suitable for selecting at least one time slot/CDMA code pair taking into account, by the remote unit (12-i), the power measured in downlink time slots of the frame and said broadcast information; and
- receiving each time slot/CDMA code pair selected inside a call set-up request message from the remote unit (11-j).

14. Fixed unit for use in the system for allocating radio channels according to claim 13, wherein the fixed unit (11-j) has means for broadcasting the CDMA codes available within each time slot.

15. **Fixed unit for use in the system for allocating radio channels** according to claim 13, wherein the fixed unit (11-j) has means for confirming or denying each time slot/CDMA code pair selected, received inside the call set-up request message.

16. Fixed unit for use in the system for allocating radio channels according to claim 13. wherein the fixed unit (11-j) has means for broadcasting information relative to occupied radio channels, power level received per time slot in the uplink transmission direction, and signal/noise ratio of the different radio channels.

## Patentansprüche

1. Verfahren zur Funkkanalzuweisung in einem Funkkommunikationssystem, das mindestens eine Festeinheit (11-j) umfaßt, die per Funk mit einer Mehrzahl von Ferneinheiten (12-1 bis 12-m) kommuniziert, so daß es innerhalb eines Zeitschlitzes eines Frames möglich ist, mehrere gleichzeitige Kommunikationen aufzubauen, die CDMA-Codes verwenden, und so daß der Zeitschlitz und der CDMA-Code gemäß einer definierten Bedingung und auf eine unabhängige Weise ausgewählt werden, **dadurch gekennzeichnet, daß**:
a) die Auswahl mindestens eines Zeitschlitz/CDMA-Code-Paares gemäß einer vordefinierten Bedingung seitens einer Ferneinheit (12-i) durchgeführt wird, indem die Leistung, die in den Abwärtszeitschlitzen des Frames gemessen wurde, und die Informationen, die durch die Festeinheit (11-j) rundgesendet wurden, berücksichtigt werden; und daß
b) jedes Zeitschlitz/CDMA-Code-Paar, das ausgewählt wurde, von der Ferneinheit (12-i) innerhalb einer Anrufaufbau-Anforderungsmeldung an die Festeinheit (11-j) gesendet wird.

2. Verfahren zur Funkkanalzuweisung nach Anspruch 1, in welchem im Fall von mehr als einem auswählbaren Zeitschlitz das Verfahren außerdem den Schritt umfaßt:
c) Auswählen eines Zeitschlitz/CDMA-Code-Paares Ferneinheit (12-i) gemäß einem vordefinierten Auswahlkriterium.

3. Verfahren zur Funkkanalzuweisung nach Anspruch 2, in welchem das vordefinierte Auswahlkriterium unter anderem aus folgendem ausgewählt wird: gleichmäßige Belegung der Zeitschlitze in dem Frame in der Anzahl von Funkkanälen und / oder Leistung; Gesamtbelegung der Funkkanäle eines Zeitschlitzes vor dem Beginn der Zuweisung der Funkkanäle eines anderen Zeitschlitzes für eine neue Kommunikation; Zuweisung einer vordefinierten Gruppe von Funkkanälen zu einer vordefinierten Gruppe von Teilnehmern, gemäß bestimmten Kriterien, wie zum Beispiel der äquivalenten Entfernung zu der Festeinheit (11-j) oder dem Dienstgüteparameter für einen vordefinierten Typ des Dienstes.

4. Verfahren zur Funkkanalzuweisung nach Anspruch 3, in welchem es ebenfalls den Schritt der Bestätigung oder Zurückweisung jedes ausgewählten Zeitschlitz/CDMA-Code-Paares seitens der Festeinheit (11-j) umfaßt.

5. Verfahren zur Funkkanalzuweisung nach Anspruch 4, in welchem es ebenfalls den Schritt der Wiederholung der Schritte a) und b) oder a), b) und c) seitens der Ferneinheit (12-i) umfaßt, falls ein ausgewähltes Zeitschlitz/CDMA-Code-Paar zurückgewiesen wird.

6. Funkkommunikationssystem, das mindestens eine Festeinheit (11-j) zum Kommunizieren per Funk mit einer Mehrzahl von Ferneinheiten (12-1 bis 12-m) umfaßt, wobei das System fähig ist, mehrere gleichzeitige Kommunikationen aufzubauen, die CDMA-Codes in einem Zeitschlitz eines TDMA-Frames verwenden und die Zeitschlitze und den CDMA-Code gemäß einer vordefinierten Bedingung und auf eine unabhängige Weise auszuwählen, **dadurch gekennzeichnet, daß** die Festeinheit (11-j) Einrichtungen aufweist zum
a) Rundsenden von Informationen an eine Ferneinheit (12-i), die zum Auswählen mindestens eines Zeitschlitz/CDMA-Code-Paares geeignet sind; und
b) Empfangen jedes Zeitschlitz/CDMA-Code-Paares, das innerhalb einer Anrufaufbau-Anforderungsmeldung von der Ferneinheit (11-j) ausgewählt wurde;
und daß die Ferneinheit (12-i) Einrichtungen aufweist zum:
a) Auswählen mindestens eines Zeitschlitz/CDMA-Code-Paares, das die Leistung, die in den Abwärtszeitschlitzen des Frames gemessen wurde, und die Informationen, die von der Festeinheit (11-j) rundgesendet wurden, berücksichtigt; und
b) Senden jedes Zeitschlitz/CDMA-Code-Paares, das innerhalb einer Anrufaufbau-Anforderungsmeldung an die Festeinheit (11-j) ausgewählt wurde.

7. Ferneinheit zur Funkkanalzuweisung in einem Funkkommunikationssystem zum Kommunizieren per Funk mit einer Festeinheit (11-j) zum Aufbauen mehrerer gleichzeitiger Kommunikationen, die CDMA-Codes in einem Zeitschlitz eines TDMA-Frames verwendet, und zum Auswählen der Zeitschlitze und des CDMA-Codes gemäß einer vordefinierten Bedingung und auf eine unabhängige Weise, **dadurch gekennzeichnet, daß** die Ferneinheit (12-i) Einrichtungen aufweist zum:
a) Auswählen mindestens eines Zeitschlitz/CDMA-Code-Paares, das die Leistung, die in den Abwärtszeitschlitzen des Frames gemessen wurde, und die Informationen, die von der Festeinheit (11-j) rundgesendet wurden, berücksichtigt; und zum
b) Senden jedes Zeitschlitz/CDMA-Code-Paares, das innerhalb einer Anrufaufbau-Anforderungsmeldung an die Festeinheit (11-j) ausgewählt wurde.

8. Ferneinheit zur Funkkanalzuweisung nach Anspruch 7, in welcher, falls mehr als ein Zeitschlitz auswählbar ist, die Ferneinheit (12-i) Einrichtungen aufweist zum
c) Auswählen eines Zeitschlitz/CDMA-Code-Paares gemäß einem vordefinierten Auswahlkriterium.

9. Ferneinheit zur Funkkanalzuweisung nach Anspruch 8, in welchem die Ferneinheit (12-i) Einrichtungen zum Auswählen aus einem der folgenden vordefinierten Auswahlkriterien aufweist: gleichmäßige Belegung der Zeitschlitze in dem Frame in Anzahl von Funkkanälen und/oder Leistung; Gesamtbelegung der Funkkanäle eines Zeitschlitzes vor Beginn der Zuweisung der Funkkanäle eines anderen Zeitschlitzes für eine neue Kommunikation; Zuweisung einer vordefinierten Gruppe von Funkkanälen zu einer vordefinierten Gruppen von Teilnehmern, gemäß bestimmten Kriterien, wie zum Beispiel der äquivalenten Entfernung zu der Festeinheit (11-j) oder dem Dienstgüteparameter für einen vordefinierten Typ des Dienstes.

10. Ferneinheit zur Funkkanalzuweisung nach Anspruch 9, in welcher die Ferneinheit (12-i) Einrichtungen zum Wiederholen der Schritte a) und b) oder a), b) und c) aufweist, falls ein ausgewähltes Zeitschlitz/CDMA-Code-Paar von der Festeinheit (11-j) zurückgewiesen wird.

11. Ferneinheit zur Funkkanalzuweisung nach Anspruch 7, in welcher die Ferneinheit (12-i) Einrichtungen zum Messen der in jedem Zeitschlitz empfangenen Gesamtleistung aufweist.

12. Ferneinheit zur Funkkanalzuweisung nach Anspruch 7, in welcher die Ferneinheit (12-i) Einrichtungen zum Auswählen des CDMA-Codes gemäß den Informationen aufweist, die von der Festeinheit (11-j) bereitgestellt wurden.

13. Festeinheit zur Verwendung in dem Funkkommunikationssystem nach Anspruch 6 zum Kommunizieren per Funk mit einer Mehrzahl von Ferneinheiten (12-1 bis 12-m), wobei das System fähig ist, mehrere gleichzeitige Kommunikationen aufzubauen, die CDMA-Codes in einem Zeitschlitz eines TDMA-Frames verwenden und die Zeitschlitze und den CDMA-Code gemäß einer definierten Bedingung und auf eine unabhängige Weise auszuwählen, **dadurch gekennzeichnet, daß** die Festeinheit (11-j) Einrichtungen aufweist zum
- Rundsenden von Informationen an eine Ferneinheit (12-i), die zum Auswählen mindestens eines Zeitschlitz/CDMA-Code-Paares durch die Ferneinheit (12-i) geeignet sind, die die Leistung, die in den Abwärtszeitschlitzen des Frames gemessen wurden, und die Rundsendeinformationen berücksichtigen; und
- Empfangen jedes Zeitschlitz/CDMA-Code-Paares, das innerhalb einer Anrufaufbau-Anforderungsmeldung von der Ferneinheit (11 -j) ausgewählt wurde.

14. Festeinheit zur Verwendung in dem System zur Funkkanalzuweisung nach Anspruch 13, in welchem die Festeinheit (11-j) Einrichtungen zum Rundsenden der CDMA-Codes aufweist, die innerhalb jedes Zeitschlitzes verfügbar sind.

15. Festeinheit zur Verwendung in dem System zur Funkkanalzuweisung nach Anspruch 13, in welchem die Festeinheit {11-j) Einrichtungen zum Bestätigen oder Zurückweisen jedes ausgewählten Zeitschlitz/CDMA-Code-Paares aufweist, das innerhalb der Anrufaufbau-Anforderungsmeldung empfangen wurde.

16. Festeinheit zur Verwendung in dem System zur Funkkanalzuweisung nach Anspruch 13, in welchem die Festeinheit (11-j) Einrichtungen zum Rundsenden von Informationen bezüglich der belegten Funkkanäle, des empfangenen Leistungspegels pro Zeitschlitz in der Aufwärtssenderichtung und des Signal-Rausch-Abstandes der verschiedenen Funkkanäle aufweist.

## Revendications

1. Procédé d'attribution de canaux radio dans un système de radiocommunications qui comprend au moins une unité fixe (11-j) qui communique par radio avec une pluralité d'unités distantes (12-1 à 12-m), de telle sorte qu'il soit possible d'établir dans une tranche de temps d'une trame diverses communications simultanées employant des codes AMDC, et que la tranche de temps et le code AMDC soient sélectionnés conformément à une condition définie et d'une manière indépendante, **caractérisé en ce que** :
a) la sélection d'au moins une paire de tranche de temps/code AMDC conformément à une condition définie est exécutée par une unité distante (12-i) en tenant compte de la puissance mesurée dans des tranches de temps de liaison descendante de la trame et d'informations diffusées par l'unité fixe (11-j) ; et **en ce que**
b) chaque paire de tranche de temps/code AMDC sélectionnée est envoyée par l'unité distante (12-i), à l'intérieur d'un message de demande d'établissement d'appel, à l'unité fixe (11-j).

2. Procédé d'attribution de canaux radio selon la revendication 1 dans lequel, dans le cas où plus d'une tranche de temps peut être sélectionnée, le procédé comprend l'étape supplémentaire de :
c) sélection par l'unité distante (12-i) d'une paire de tranche de temps/code AMDC conformément à un critère de sélection prédéterminé.

3. Procédé d'attribution de canaux radio selon la revendication 2, dans lequel le critère de sélection prédéterminé est choisi parmi les critères suivants : occupation uniforme des tranches de temps dans la trame en nombre de canaux radio et/ou puissance ; occupation totale des canaux radio d'une tranche de temps avant de commencer l'attribution des canaux radio d'une autre tranche de temps pour une nouvelle communication ; attribution d'un groupe prédéterminé de canaux radio à un groupe prédéterminé d'abonnés, conformément à certains critères, tels qu'une distance équivalente par rapport à l'unité fixe (11-j) ou un paramètre de qualité de service pour un type de service prédéterminé.

4. Procédé d'attribution de canaux radio selon la revendication 3, lequel comprend également l'étape de confirmation ou de refus de chaque paire de tranche de temps/code AMDC sélectionnée, par l'unité fixe (11-j).

5. Procédé d'attribution de canaux radio selon la revendication 4, lequel comprend aussi l'étape de répétition des étapes a) et b) ou a), b) et c), par l'unité distante (12-i), au cas où une paire de tranche de temps/code AMDC quelconque sélectionnée est refusée.

6. Système de radiocommunications qui comprend au moins une unité fixe (11-j) pour communiquer par radio avec une pluralité d'unités distantes (12-1 à 12-m), le système étant capable d'établir diverses communications simultanées employant des codes AMDC dans une tranche de temps d'une trame AMRT et de sélectionner les tranches de temps et le code AMDC conformément à une condition définie et d'une manière indépendante, **caractérisé en ce que** l'unité fixe (11-j) a des moyens pour :
a) diffuser à une unité distante (12-i) des informations pertinentes pour sélectionner au moins une paire de tranche de temps/code AMDC ; et
b) recevoir chaque paire de tranche de temps/code AMDC sélectionnée à l'intérieur d'un message de demande d'établissement d'appel depuis l'unité distante (12-i) ;
et **en ce que** l'unité distante (12-i) a des moyens pour :
a) sélectionner au moins une paire de tranche de temps/code AMDC en tenant compte de la puissance mesurée dans les tranches de temps de liaison descendante de la trame et d'informations diffusées par l'unité fixe (11-j) ; et
b) envoyer chaque paire de tranche de temps/code AMDC sélectionnée à l'intérieur d'un message de demande d'établissement d'appel à l'unité fixe (11-j).

7. Unité distante pour attribuer des canaux radio dans un système de radiocommunications, pour communiquer par radio avec une unité fixe (11-j) pour établir diverses communications simultanées employant des codes AMDC dans une tranche de temps d'une trame AMRT et pour sélectionner les tranches de temps et le code AMDC conformément à une condition définie et d'une manière indépendante, **caractérisée en ce que** l'unité distante (12-i) a des moyens pour :
a) sélectionner au moins une paire de tranche de temps/code AMDC en tenant compte de la puissance mesurée dans les tranches de temps de liaison descendante de la trame et d'informations diffusées par l'unité fixe (11-j); et pour
b) envoyer chaque paire de tranche de temps/code AMDC sélectionnée à l'intérieur d'un message de demande d'établissement d'appel à l'unité fixe (11-j).

8. Unité distante pour attribuer des canaux radio selon la revendication 7 dans laquelle, dans le cas où plus d'une tranche de temps peut être sélectionnée, l'unité distante (12-i) a des moyens pour :
c) sélectionner une paire de tranche de temps/code AMDC conformément à un critère de sélection prédéterminé.

9. Unité distante pour attribuer des canaux radio selon la revendication 8 dans laquelle l'unité distante (12-i) a des moyens pour choisir l'un des critères de sélection prédéterminés suivants : occupation uniforme des tranches de temps dans la trame en nombre de canaux radio et/ou puissance ; occupation totale des canaux radio d'une tranche de temps avant de commencer l'attribution des canaux radio d'une autre tranche de temps pour une nouvelle communication ; attribution d'un groupe prédéterminé de canaux radio à un groupe prédéterminé d'abonnés, conformément à certains critères, tels qu'une distance équivalente par rapport à l'unité fixe (11-j) ou un paramètre de qualité de service pour un type de service prédéterminé.

10. Unité distante pour attribuer des canaux radio selon la revendication 9, dans laquelle l'unité distante (12-i) a des moyens pour répéter les étapes a) et b) ou a), b) et c) au cas où une paire de tranche de temps/code AMDC quelconque sélectionnée est refusée par l'unité fixe (11-j).

11. Unité distante pour attribuer des canaux radio selon la revendication 7, dans laquelle l'unité distante (12-i) a des moyens pour mesurer la puissance totale reçue dans chaque tranche de temps.

12. Unité distante pour attribuer des canaux radio selon la revendication 7, dans laquelle l'unité distante (12-i) a des moyens pour sélectionner le code AMDC conformément aux informations fournies par l'unité fixe (11-j).

13. Unité fixe destinée à être utilisée dans le système de radiocommunications selon la revendication 6 pour communiquer par radio avec une pluralité d'unités distantes (12-1 à 12-m), le système étant capable d'établir diverses communications simultanées employant des codes AMDC dans une tranche de temps d'une trame AMRT et de sélectionner les tranches de temps et le code AMDC conformément à une condition définie et d'une manière indépendante, **caractérisée en ce que** l'unité fixe (11-j) a des moyens pour :
- diffuser à une unité distante (12-i) des informations pertinentes pour sélectionner au moins une paire de tranche de temps/code AMDC en tenant compte, par l'unité distante (12-i), de la puissance mesurée dans les tranches de temps de liaison descendante de la trame et desdites informations diffusées ; et
- recevoir chaque paire de tranche de temps/code AMDC sélectionnée à l'intérieur d'un message de demande d'établissement d'appel depuis l'unité distante (12-i).

14. Unité fixe destinée à être utilisée dans le système d'attribution de canaux radio selon la revendication 13, dans laquelle l'unité fixe (11-j) a des moyens pour diffuser les codes AMDC disponibles dans chaque tranche de temps.

15. Unité fixe destinée à être utilisée dans le système d'attribution de canaux radio selon la revendication 13, dans laquelle l'unité fixe (11-j) a des moyens pour confirmer ou refuser chaque paire de tranche de temps/code AMDC sélectionnée, reçue à l'intérieur du message de demande d'établissement d'appel.

16. Unité fixe destinée à être utilisée dans le système d'attribution de canaux radio selon la revendication 13, dans laquelle l'unité fixe (11-j) a des moyens pour diffuser des informations concernant les canaux radio occupés, le niveau de puissance reçu par tranche de temps dans le sens de transmission sur liaison montante, et le rapport signal/bruit des différents canaux radio.
